# FASCICULE DE BREVET EUROPEEN

(11) **EP 4 094 933 B1**
(45) Date de publication et mention de la délivrance du brevet: **12.07.2023**
(21) Numéro de dépôt: 22170642.7
(22) Date de dépôt: 28.04.2022
(51) Int. Cl.: B32B 3/12, B32B 38/06, F16S 1/00

(54) **PROCÉDÉ DE FABRICATION D'UNE STRUCTURE ALVÉOLAIRE OBTENUE À PARTIR DE BANDES DE MATIÈRE PLIÉES ET STRUCTURE ALVÉOLAIRE AINSI OBTENUE**
VERFAHREN ZUR HERSTELLUNG EINER AUS GEFALTETEN MATERIALSTREIFEN ERHALTENEN WABENSTRUKTUR UND SO ERHALTENE WABENSTRUKTUR
METHOD FOR MANUFACTURING A HONEYCOMB STRUCTURE OBTAINED FROM FOLDED STRIPS OF MATERIAL AND HONEYCOMB STRUCTURE THUS OBTAINED

(30) Priorité: 27.05.2021 FR 2105509
(43) Date de publication de la demande: 30.11.2022
(73) Titulaire: AIRBUS OPERATIONS (S.A.S.), 31060 Toulouse (FR)
(72) Inventeur: RAVISE, Florian, 31060 TOULOUSE (FR); CARIOU, Charles, 31060 TOULOUSE (FR); GAUTHIER, Maxime, 31060 TOULOUSE (FR); COLMAGRO, Jérôme, 31060 TOULOUSE (FR)
(74) Mandataire: Jardel, Marc Henry Philippe

(56) Documents cités:
- EP-A1- 3 650 332
- FR-A1- 3 060 829
- FR-A1- 3 098 143

## Description

La présente demande se rapporte à un procédé de fabrication d'une structure alvéolaire obtenue à partir de bandes de matière pliées ainsi qu'à une structure alvéolaire ainsi obtenue. Plus largement, la présente demande se rapporte à un revêtement d'absorption acoustique équipant un aéronef.

Selon un mode de réalisation, un revêtement d'absorption acoustique comprend une couche poreuse en contact avec un milieu dans lequel se propagent des ondes sonores, une structure alvéolaire ainsi qu'une couche réflectrice.

Selon un mode de réalisation simplifié, la structure alvéolaire de type nid d'abeilles comprend une pluralité de cellules accolées, identiques et de section hexagonale. Ce type de structure alvéolaire convient pour certaines plages de fréquences, plus particulièrement les fréquences élevées. Pour les basses fréquences, il est nécessaire de prévoir des cellules de grand volume, ce qui conduit à augmenter l'épaisseur de la structure alvéolaire. Or, le revêtement d'absorption acoustique doit être le moins épais possible.

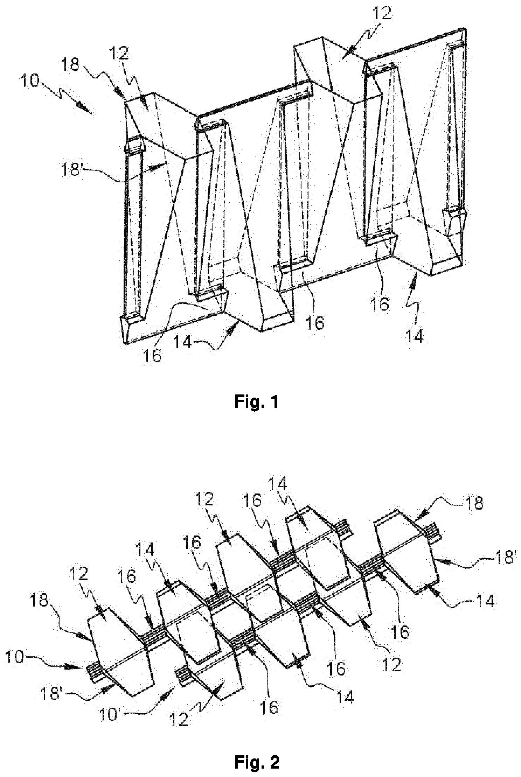

Le document FR-3.098.143 propose une structure alvéolaire particulière permettant d'augmenter le volume des cellules sans augmenter l'épaisseur de la structure alvéolaire. Comme illustré sur les figures 1 et 2, une telle structure alvéolaire comprend plusieurs rangées d'alvéoles 10, 10' comportant chacune de manière alternée, des premières alvéoles 12 ouvertes en direction d'une première face destinée à être plaquée contre la couche poreuse et fermées en direction d'une seconde face destinée à être plaquée contre la couche réflectrice, ainsi que des deuxièmes alvéoles 14 fermées en direction de la première face et ouvertes en direction de la seconde face, chaque première alvéole 12 communiquant avec une deuxième alvéole 14 via un conduit 16 positionné à proximité de la seconde face. Ainsi, le volume d'une cellule correspond à la somme des volumes d'une première alvéole 12, d'une deuxième alvéole 14 et d'un conduit 16.

Les rangées d'alvéoles 10, 10' sont toutes identiques et juxtaposées les unes aux autres en étant décalées, les premières alvéoles d'une première rangée étant accolées contre les deuxièmes alvéoles d'une deuxième rangée juxtaposée à la première.

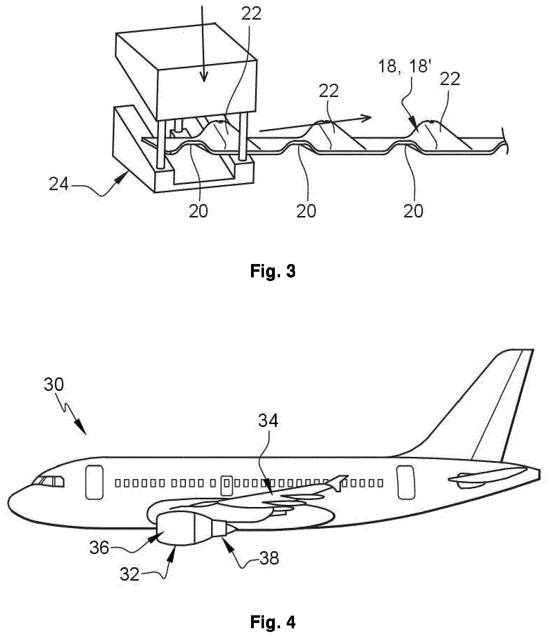

Selon un mode de réalisation, chaque rangée d'alvéoles 10, 10' est obtenue par accolement de deux bandes de matière 18, 18'. Comme illustré sur la figure 3, chaque bande de matière 18, 18' comprend de manière alternée une première empreinte 20 correspondant à une moitié d'une première alvéole 12, une deuxième empreinte 22 correspondant à une moitié d'une deuxième alvéole 14 ainsi qu'un sillon reliant les première et deuxième empreintes 20, 22 et correspondant à une moitié d'un conduit 16.

Selon un mode opératoire, un procédé de fabrication d'une structure alvéolaire comprend une étape de mise en forme des bandes de matière 18, 18' pour obtenir les empreintes 20, 22 par forgeage ou emboutissage, à l'aide d'un outil 24 visible sur la figure 3, et une étape d'assemblage des bandes de matière 18, 18' par soudage ou collage.

L'étape de mise en forme requiert une déformation plastique de la matière qui engendre un étirement de la matière dans certaines zones et des plissements dans d'autres. Cette déformation plastique limite le choix des matériaux et des épaisseurs envisageables pour les bandes de matière 18, 18'.

La présente invention vise à remédier à tout ou partie des inconvénients de l'art antérieur.

A cet effet, l'invention a pour objet un procédé de fabrication d'une structure alvéolaire présentant des première et deuxième faces ainsi que des rangées d'alvéoles comprenant chacune, de manière alternée, des premières alvéoles ouvertes en direction de la première face et des deuxièmes alvéoles ouvertes en direction de la deuxième face ; la structure alvéolaire comprenant également, entre chaque rangée d'alvéoles, des troisièmes alvéoles ouvertes en direction des première et deuxième faces.

Selon l'invention, le procédé de fabrication d'une structure alvéolaire comprend une étape de mise en forme par pliage de premières et deuxièmes bandes de matière pour obtenir, pour chaque bande de matière, des premières et deuxièmes formes en creux ainsi que des zones de jonction séparant les premières et deuxièmes formes en creux, les première et deuxième bandes de matière étant identiques ; ainsi qu'une étape d'assemblage des premières et deuxièmes bandes de matière pour former la structure alvéolaire en plaquant et reliant les zones de jonction des premières bandes de matière contre les zones de jonction des deuxièmes bandes de matière, les premières et deuxièmes formes en creux étant alternées et agencées de manière à former les premières et deuxièmes alvéoles ainsi que les troisièmes alvéoles.

Selon l'invention, lors de l'étape de mise en forme par pliage des premières et deuxièmes bandes de matière, chaque première bande de matière est mise en forme par pliage pour obtenir en outre un premier sillon et chaque deuxième bande de matière est mise en forme par pliage pour obtenir en outre un deuxième sillon, les premier et deuxième sillons formant des conduits reliant chacun un couple de première et deuxième alvéoles.

Contrairement à une déformation plastique, la mise en forme par pliage permet d'élargir le choix de matières et d'épaisseurs pour les première et deuxième bandes de matière. En outre, les première et deuxième bandes de matière étant identiques, l'assemblage de la structure alvéolaire est facilité. En effet, les premières et deuxièmes bandes de matière peuvent facilement être tournées et décalées pour former les premières et deuxièmes alvéoles.

Selon une autre caractéristique, chaque première et deuxième bande de matière comprend des lignes de pliage principales agencées de manière à ce que chaque première et deuxième forme en creux comprenne une face principale séparée de première et deuxième faces latérales triangulaires, lesdites première et deuxième faces latérales étant disposées de part et d'autre de la face principale, ainsi que des lignes de pliage secondaire agencées de manière à ce que chaque première et deuxième face latérale soit séparée d'une zone de jonction, la face principale étant inclinée par rapport aux zones de jonction et, lors de l'étape d'assemblage, les faces principales de chaque première bande de matière étant plaquées contre et reliées aux faces principales d'une deuxième bande de matière.

Selon une autre caractéristique, pour chaque première et deuxième formes en creux, les lignes de pliage principales et secondaires sont symétriques par rapport à un axe médian longitudinal équidistant des zones de jonction disposées de part et d'autre de la première et deuxième formes en creux.

Selon une autre caractéristique, les premiers et deuxièmes sillons sont positionnés au niveau des faces principales des premières et deuxièmes formes en creux et comprennent chacun des lignes de pliage agencées de manière à ce que chaque couple de premier et deuxième sillons forme un conduit positionné entre deux faces principales plaquées l'une contre l'autre.

Selon une autre caractéristique, chaque premier et deuxième sillon comprend une ligne de pliage médiane ainsi que deux lignes de pliage obliques symétriques par rapport à la ligne de pliage médiane et sécantes au niveau de la ligne de pliage médiane.

Selon une autre caractéristique, le procédé de fabrication comprend une étape de réalisation d'une découpe sur la face principale de chaque première et deuxième forme en creux de chaque première et deuxième bande de matière à plat préalablement à l'étape de mise en forme par pliage, chaque découpe étant configurée pour faire communiquer une première ou deuxième alvéole et un conduit.

Selon un premier mode de réalisation, chaque première et deuxième bande de matière comprend des premier et deuxième côtés longitudinaux, la découpe étant décalée par rapport aux premier et deuxième côtés longitudinaux des première et deuxième bandes de matière.

Selon un deuxième mode de réalisation, chaque première et deuxième bande de matière comprend des premier et deuxième côtés longitudinaux, la découpe étant sécante avec un côté longitudinal parmi les premier et deuxième côtés longitudinaux des première et deuxième bandes de matière.

L'invention a également pour objet une structure alvéolaire obtenue à partir dudit procédé de fabrication, un revêtement d'absorption acoustique comprenant une couche poreuse, une couche réflectrice et une telle structure alvéolaire intercalée entre la couche poreuse et la couche réflectrice ainsi qu'un aéronef comprenant au moins un tel revêtement d'absorption acoustique.

Plus précisément l'invention a pour objet une structure alvéolaire présentant des première et deuxième faces ainsi que des rangées d'alvéoles comprenant chacune, de manière alternée, des premières alvéoles ouvertes en direction de la première face et des deuxièmes alvéoles ouvertes en direction de la deuxième face, la structure alvéolaire comprenant également, entre chaque rangée d'alvéoles, des troisièmes alvéoles ouvertes en direction des première et deuxième faces, chaque rangée d'alvéoles comprenant des premières et deuxièmes bandes de matière accolées l'une contre l'autre, chaque première et deuxième bande de matière comprenant des premières et deuxièmes formes en creux ainsi que des zones de jonction séparant les premières et deuxièmes formes en creux, les premières et deuxièmes formes en creux étant alternées et agencées de manière à former les premières et deuxièmes alvéoles ainsi que les troisièmes alvéoles.

Selon l'invention, les premières et deuxièmes bandes de matière sont identiques et mises en forme par pliage.

Selon l'invention, la structure alvéolaire comprend des conduits reliant chacun un couple de première et deuxième alvéoles, chaque conduit comprenant un premier sillon au niveau de chaque première bande de matière ainsi qu'un deuxième sillon au niveau de chaque deuxième bande de matière.

Selon une autre caractéristique, chaque première ou deuxième forme en creux comprend une face principale inclinée par rapport aux zones de jonction ainsi que des première et deuxième faces latérales triangulaires disposées de part et d'autre de la face principale, les faces principales de chaque première bande de matière étant plaquées contre et reliées aux faces principales de chaque deuxième bande de matière.

Selon une autre caractéristique, la face principale de chaque première et deuxième forme en creux comprend une découpe configurée pour faire communiquer une première ou deuxième alvéole et un conduit.

D'autres caractéristiques et avantages ressortiront de la description de l'invention qui va suivre, description donnée à titre d'exemple uniquement, en regard des dessins annexés parmi lesquels :
La Fig. 1 est une vue en perspective d'une rangée d'alvéoles d'une structure alvéolaire illustrant un mode de réalisation de l'art antérieur,
La Fig. 2 est une vue de dessus d'une structure alvéolaire illustrant un mode de réalisation de l'art antérieur,
La Fig. 3 est une représentation schématique d'une bande de matière mise en forme selon un mode opératoire de l'art antérieur,
La Fig. 4 est une vue latérale d'un aéronef,
La Fig. 5 est une vue en perspective d'un conduit d'éjection primaire comprenant au moins un revêtement d'absorption acoustique qui illustre une application de l'invention,
La Fig. 6 est une vue en perspective d'un revêtement d'absorption acoustique illustrant un mode de réalisation de l'invention,
La Fig. 7 est une vue de face d'une bande de matière à plat illustrant un premier mode de réalisation de l'invention,
La Fig. 8 est une vue en perspective d'une partie de la bande de matière visible sur la figure 7 après pliage,
La Fig. 9 est une vue en perspective d'une partie d'un assemblage de deux bandes de matière juxtaposées illustrant le premier mode de réalisation de l'invention,
La Fig. 10 est une vue de côté de l'assemblage visible sur la figure 9,
La Fig. 11 est une vue de dessus de plusieurs rangées d'alvéoles obtenues à partir de bandes de matière telles qu'illustrées sur la figure 7,
La Fig. 12 est une vue de face d'une bande de matière à plat illustrant un deuxième mode de réalisation de l'invention,
La Fig. 13 est une vue en perspective d'une partie de la bande de matière visible sur la figure 12 après pliage,
La Fig. 14 est une vue en perspective d'une partie d'un assemblage de deux bandes de matière juxtaposées illustrant le deuxième mode de réalisation de l'invention,
La Fig. 15 est une vue de dessus de l'assemblage visible sur la figure 14,
La Fig. 16 est une vue de côté de l'assemblage visible sur la figure 14,
La Fig. 17 est une vue de dessus de plusieurs rangées d'alvéoles obtenues à partir de bandes de matière telles qu'illustrées sur la figure 12,
La Fig. 18 est une vue en perspective de plusieurs bandes de matière avant assemblage illustrant le deuxième mode de réalisation de l'invention, et
La Fig. 19 est une vue en perspective d'une partie d'une structure alvéolaire obtenue en assemblant les bandes de matière visibles sur la figure 18.

Sur la figure 4, on a représenté un aéronef 30 qui présente des ensembles propulseurs 32 fixés sous ses ailes 34. Chaque ensemble propulseur 32 comprend une nacelle 36 et une turbomachine 38 positionnée à l'intérieur de la nacelle 36.

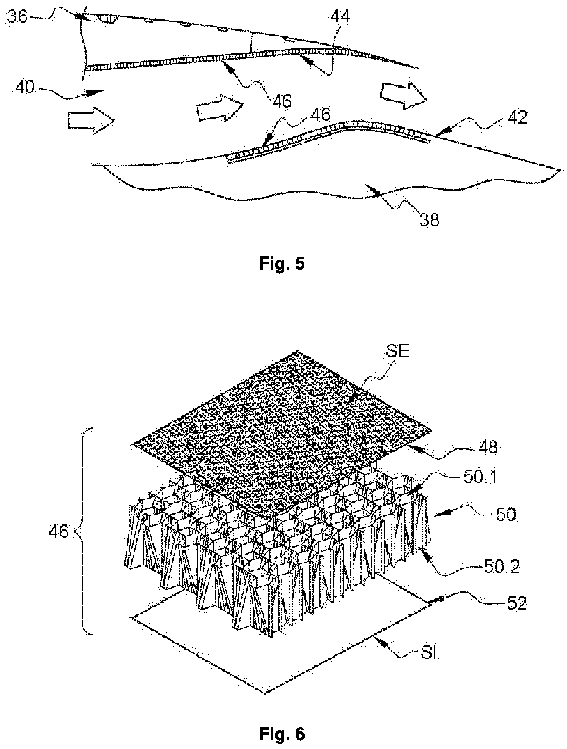

Selon un mode de réalisation visible sur la figure 5, l'ensemble propulseur 32 comprend un conduit d'éjection secondaire 40, canalisant un flux d'air secondaire, qui est délimité par une paroi intérieure 42 (également appelée IFS pour « inner fixed structure » en anglais) et par une paroi extérieure 44 (également appelée OFS pour « outer fixed structure » en anglais).

Selon une configuration, la paroi intérieure 42 ou la paroi extérieure 44 comprend un revêtement d'absorption acoustique 46 (également appelé panneau acoustique).

Bien que décrite appliquée à un conduit d'éjection secondaire 40, l'invention n'est pas limitée à cette application. Ainsi, le revêtement d'absorption acoustique 46 peut être positionné au niveau de toute surface en contact avec un milieu dans lequel se propagent, en fonctionnement, des ondes sonores, comme une lèvre et un conduit d'une entrée d'air d'une nacelle d'aéronef, un carter de soufflante d'une nacelle d'aéronef ou toute autre surface de l'ensemble propulseur 32 par exemple. Quelle que soit la configuration, l'aéronef 30 et plus particulièrement un de ses ensembles propulseurs 32 comprend au moins un revêtement d'absorption acoustique 46.

Selon un mode de réalisation visible sur la figure 6, le revêtement d'absorption acoustique 46 présente une surface extérieure SE en contact avec un milieu dans lequel se propagent, en fonctionnement, des ondes sonores et une surface intérieure SI opposée à la surface extérieure SE. Le revêtement d'absorption acoustique 46 comprend, de la couche extérieure SE vers la couche intérieure SI, une couche poreuse 48 (également appelée couche résistive) dont une face forme la surface extérieure SE, au moins une structure alvéolaire 50 ainsi qu'une couche réflectrice 52 dont une face forme la surface intérieure SI. Ainsi, la couche poreuse 48 est plaquée contre une première face 50.1 de la structure alvéolaire 50 et la couche réflectrice 52 est plaquée contre une deuxième face 50.2 de la structure alvéolaire 50, opposée à la première face 50.1.

Pour la suite de la description, une direction longitudinale est perpendiculaire à la première face 50.1. Un plan longitudinal contient la direction longitudinale. Un plan transversal est un plan perpendiculaire à la direction longitudinale.

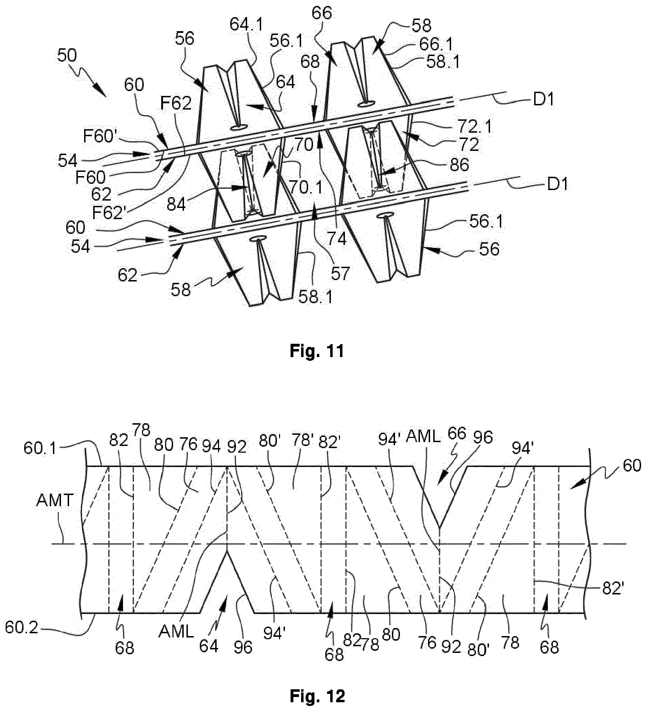

Comme illustré sur les figures 11, 17 et 19, la structure alvéolaire 50 comprend plusieurs rangées d'alvéoles 54 orientées selon une première direction D1 et comportant chacune, de manière alternée, des premières alvéoles 56 qui présentent chacune une première ouverture 56.1 débouchant au niveau de la première face 50.1 et une section transversale qui augmente en direction de la première face 50.1 ainsi que des deuxièmes alvéoles 58 qui présentent chacune une deuxième ouverture 58.1 débouchant au niveau de la deuxième face 50.2 et une section transversale qui augmente en direction de la deuxième face 50.2.

Les premières alvéoles 56, débouchant sur la première face 50.1 en direction de la couche poreuse 48 permettent d'atténuer les hautes fréquences tandis que les deuxièmes alvéoles 58, débouchant sur la deuxième face 50.2 en direction de la couche réflectrice 52 permettent d'atténuer les basses fréquences.

Chaque rangée d'alvéoles 54 comprend des première et deuxième bandes de matière 60, 62 accolées l'une contre l'autre. La première bande de matière 60 comprend une première face interne F60 orientée vers la deuxième bande de matière 62 ainsi qu'une première face externe F60' opposée à la première face interne F60. La première bande de matière 60 comprend également des premier et deuxième côtés longitudinaux 60.1, 60.2 parallèles entre eux, les premier et deuxième côtés longitudinaux 60.1, 60.2 étant positionnés respectivement au niveau des première et deuxième faces 50.1, 50.2.

En parallèle, la deuxième bande de matière 62 comprend une deuxième face interne F62 orientée vers la première bande de matière 60 ainsi qu'une deuxième face externe F62' opposée à la deuxième face interne F62. La deuxième bande de matière 62 comprend également des premier et deuxième côtés longitudinaux 62.1, 62.2 parallèles entre eux, les premier et deuxième côtés longitudinaux 62.1, 62.2 étant positionnés respectivement au niveau des première et deuxième faces 50.1, 50.2.

Chaque première bande de matière 60 comprend des premières formes en creux 64, des deuxièmes formes en creux 66 ainsi que des zones de jonction 68 séparant les premières et deuxièmes formes en creux 64, 66, les premières et deuxièmes formes en creux 64, 66 étant alternées. Les zones de jonction 68 sont coplanaires et positionnées dans un plan de référence. Chaque première forme en creux 64 comprend un premier bord 64.1 positionné au niveau du premier côté longitudinal 60.1, écarté du plan de référence, formant une première moitié de la première ouverture 56.1 d'une première alvéole 56. Chaque deuxième forme en creux 66 comprend un deuxième bord 66.1 positionné au niveau du deuxième côté longitudinal 60.2, écarté du plan de référence, formant une première moitié de la deuxième ouverture 58.1 d'une deuxième alvéole 58.

Chaque deuxième bande de matière 62 comprend des premières formes en creux 70, des deuxièmes formes en creux 72 ainsi que des zones de jonction 74 séparant les premières et deuxièmes formes en creux 70, 72, les premières et deuxièmes formes en creux 70, 72 étant alternées. Les zones de jonction 74 sont coplanaires et positionnées dans un plan de référence. Chaque première forme en creux 70 comprend un premier bord 70.1 positionné au niveau du premier côté longitudinal 60.1, écarté du plan de référence, formant une deuxième moitié de la première ouverture 56.1 d'une première alvéole 56. Chaque deuxième forme en creux 72 comprend un deuxième bord 72.1 positionné au niveau du deuxième côté longitudinal 60.2, écarté du plan de référence, formant une deuxième moitié de la deuxième ouverture 58.1 d'une deuxième alvéole 58.

Pour obtenir une rangée d'alvéoles 54, les première et deuxième bandes de matière 60, 62 sont accolées l'une contre l'autre en reliant leurs zones de jonction 68, 74 par collage, soudage ou toute autre technique d'assemblage. A cet effet, les premières et deuxièmes formes en creux 64, 66, 70, 72 ainsi que les zones de jonction 68, 74 sont agencées de manière à former les premières et deuxièmes alvéoles 56, 58 lorsque les première et deuxième bandes de matière 60, 62 sont assemblées.

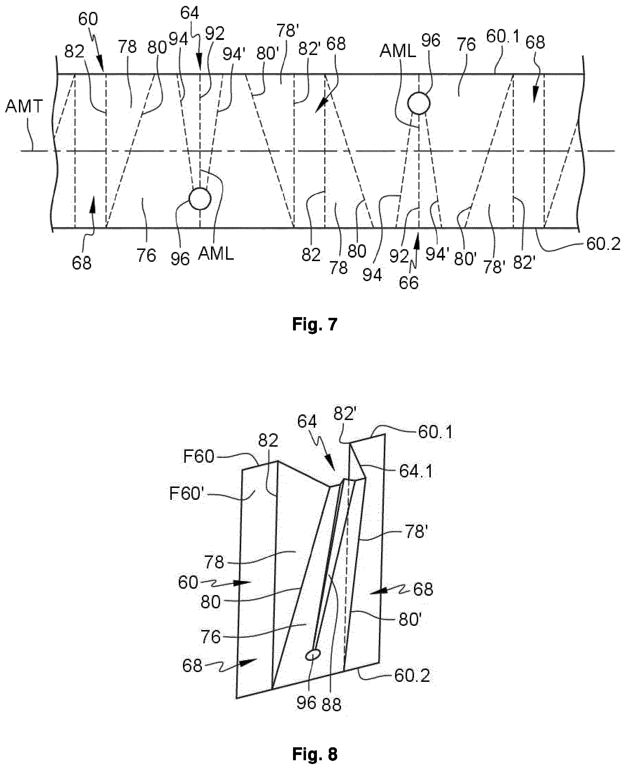

Les première et deuxième bandes de matière 60, 62 sont identiques. Pour chacune des premières et deuxièmes bandes de matière 60, 62, les premières formes en creux 64, 70 et les deuxièmes formes en creux 66, 72 sont symétriques par rapport à un axe médian transversal AMT (visible sur les figures 7 et 12) situé à équidistance des premier et deuxième côtés longitudinaux 60.1, 60.2 ; 62.1, 62.2 des première et deuxième bandes de matière 60, 62.

Selon une caractéristique de l'invention, les première et deuxième formes en creux 64, 66, 70, 72 des première et deuxième bandes de matière 60, 62 sont obtenues par pliage.

Chaque première ou deuxième forme en creux 64, 66, 70, 72 comprend une face principale 76 et des première et deuxième faces latérales 78, 78' triangulaires, disposées de part et d'autre de la face principale 76 et reliant la face principale 76 ainsi que l'une des zones de jonction 68, 74. La face principale 76 est séparée de la première face latérale 78 par une première ligne de pliage principale 80 et de la deuxième face latérale 78' par une deuxième ligne de pliage principale 80'. Chaque zone de jonction 68, 74 est approximativement rectangulaire. La première face latérale 78 est séparée d'une première zone de jonction 68, 74 par une première ligne de pliage secondaire 82. La deuxième face latérale 78' est séparée d'une deuxième zone de jonction 68, 74 par une deuxième ligne de pliage secondaire 82'. Les première et deuxième lignes secondaires 82, 82' sont perpendiculaires aux premier et deuxième côtés longitudinaux 60.1, 60.2, 62.1, 62.2.

Pour chaque première ou deuxième forme en creux 64, 66, 70, 72, les premières et deuxièmes lignes de pliage principales et secondaires 80, 80', 82, 82' sont symétriques par rapport à un axe médian longitudinal AML équidistant des zones de jonction 68, 74.

Pour les premières formes en creux 64, 70 des premières et deuxièmes bandes de matière 60, 62, les première et deuxième faces latérales 78, 78' comprennent chacune un côté positionné au niveau des premiers côtés longitudinaux 60.1, 62.1. Pour les deuxièmes formes en creux 66, 72 des premières et deuxièmes bandes de matière 60, 62, les première et deuxième faces latérales 78, 78' comprennent chacune un côté positionné au niveau des deuxièmes côtés longitudinaux 60.2, 62.2.

Les rangées d'alvéoles 54 sont agencées de manière à ce que :
a. La face principale 76 d'une première forme en creux 64 d'une première bande de matière 60 d'une première rangée soit plaquée contre une face principale 76 d'une deuxième forme en creux 72 d'une deuxième bande de matière 62 d'une deuxième rangée ;
b. La face principale 76 d'une deuxième forme en creux 66 de la première bande de matière 60 de la première rangée soit plaquée contre une face principale 76 d'une première forme en creux 70 de la deuxième bande de matière 62 de la deuxième rangée.

Selon une particularité de l'invention, la structure alvéolaire 50 comprend, pour chaque première alvéole 56 d'une première rangée, un premier conduit 84 la reliant à une deuxième alvéole 58 d'une deuxième rangée accolée contre la première alvéole 56 ainsi que, pour chaque deuxième alvéole 58 de la première rangée, un deuxième conduit 86 la reliant à une première alvéole 56 de la deuxième rangée accolée contre la deuxième alvéole 58.

Les premières alvéoles 56 atténuent les hautes fréquences, puis alimentent les deuxièmes alvéoles 58 qui atténuent les basses fréquences. Les premières et deuxièmes alvéoles 56, 58 fonctionnent donc ensemble.

Contrairement à l'art antérieur, un résonateur d'Helmholtz n'est pas obtenu en reliant une première alvéole et une deuxième alvéole d'une même rangée d'alvéoles mais en reliant une première alvéole d'une première rangée d'alvéoles et une deuxième alvéole d'une deuxième rangée d'alvéoles ou une deuxième alvéole de la première rangée d'alvéoles et une première alvéole de la deuxième rangée d'alvéoles.

Selon une configuration, le premier conduit 84 est intercalé entre la face principale 76 d'une première forme en creux 64 d'une première bande de matière 60 d'une première rangée et la face principale 76 d'une deuxième forme en creux 72 d'une deuxième bande de matière 62 d'une deuxième rangée. Le deuxième conduit 86 est intercalé entre la face principale 76 d'une deuxième forme en creux 66 de la première bande de matière 60 de la première rangée et la face principale 76 d'une première forme en creux 70 de la deuxième bande de matière 62 de la deuxième rangée.

Selon une particularité de l'invention, chaque premier ou deuxième conduit 84, 86 comprend un premier sillon 88 au niveau de la première bande de matière 60 et un deuxième sillon 90 au niveau de la deuxième bande de matière 62, les premier et deuxième sillons 88, 90 étant agencés de manière à coopérer pour former un premier ou deuxième conduit 84, 86 lorsque les première et deuxième bandes de matière 60, 62 sont assemblées.

Les premier et deuxième sillons 88, 90 sont prévus au niveau des faces principales 76 des premières et deuxièmes formes en creux 64, 66, 70, 72.

Selon une particularité de l'invention, les premiers et deuxièmes sillons 88, 90 sont obtenus par pliage.

Chaque premier ou deuxième sillon 88, 90 comprend une ligne de pliage médiane 92 positionnée au niveau de l'axe médian longitudinal AML de chaque forme en creux 64, 66, 70, 72 ainsi que deux lignes de pliage obliques 94, 94' symétriques par rapport à la ligne de pliage médiane 92 et sécantes au niveau de la ligne de pliage médiane 92. Ainsi, pour chaque premier ou deuxième sillon 88, 90, la ligne de pliage médiane 92 correspond au fond du premier ou deuxième sillon 88, 90 et les lignes de pliage obliques 94, 94' aux rives du premier ou deuxième sillon 88, 90. Quel que soit le mode de réalisation, chaque premier ou deuxième sillon 88, 90 comprend des lignes de pliage 92, 94, 94' agencées de manière à ce que les premier et deuxième sillons 88, 90 (de bandes de matière différentes) forment un premier ou deuxième conduit 84, 86 positionné entre deux faces principales 76 plaquées l'une contre l'autre.

Chaque face principale 76 comprend une découpe 96 configurée pour faire communiquer une première ou deuxième alvéole 56, 58 et un premier ou deuxième conduit 84, 86.

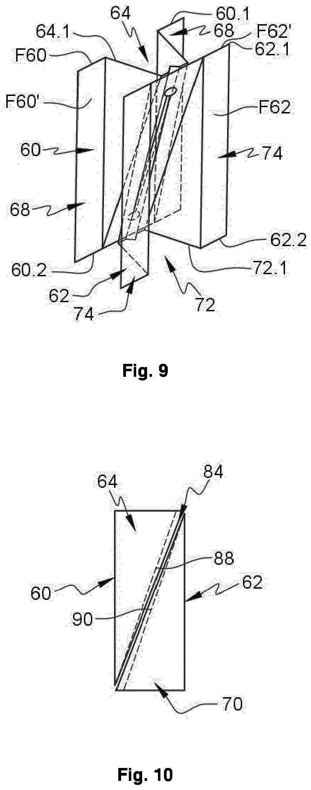

Selon un premier mode de réalisation visible sur les figures 7 à 11, la découpe 96 est décalée par rapport aux premier et deuxième côtés longitudinaux 60.1, 60.2 ; 62.1, 62.2 des première et deuxième bandes de matière 60, 62.

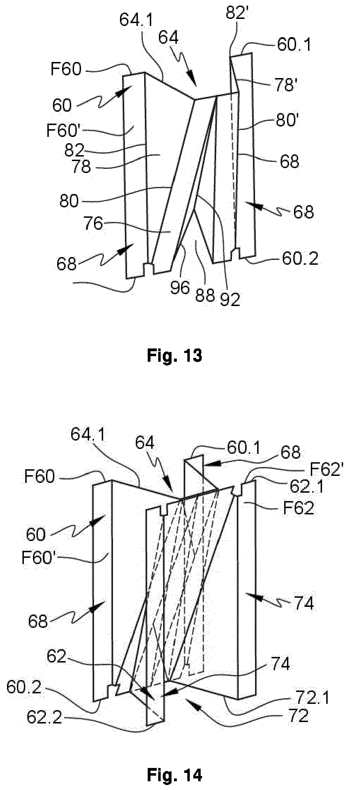

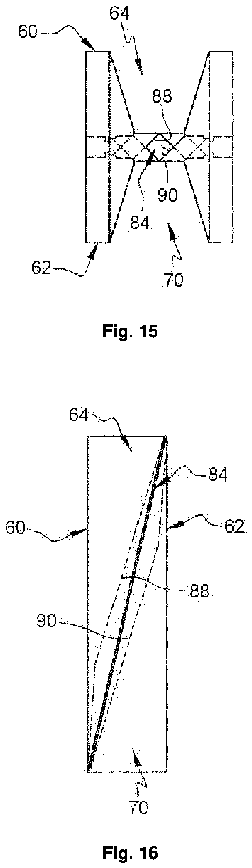

Selon un deuxième mode de réalisation visible sur les figures 12 à 19, la découpe 96 est sécante avec un côté longitudinal parmi les premier et deuxième côtés longitudinaux 60.1, 60.2 ; 62.1, 62.2 des première et deuxième bandes de matière 60, 62.

Plusieurs modes de réalisation sont envisageables pour obtenir par pliage les premières et deuxièmes formes en creux 64, 66, 70, 72 ainsi que les premiers et deuxièmes sillons 88, 90.

Selon un premier mode de réalisation visible sur les figures 7 à 11 décrit au regard d'une première bande de matière 60, la face principale 76 de la première forme en creux 64 a une forme trapézoïdale et présente une grande base positionnée au niveau du deuxième côté longitudinal 60.2 ainsi qu'une petite base positionnée au niveau du premier côté longitudinal 60.1. Cette face principale 76 présente des lignes de pliage obliques 94, 94' espacées de la ligne de pliage médiane 92 au niveau du premier côté longitudinal 60.1 et qui convergent au niveau du deuxième côté longitudinal 60.2. La découpe 96 a la forme d'un disque positionné de manière symétrique par rapport à la ligne de pliage médiane 92 et à proximité du deuxième côté longitudinal 60.2.

En complément, la face principale 76 de la deuxième forme en creux 66 a une forme trapézoïdale et présente une grande base positionnée au niveau du premier côté longitudinal 60.1 ainsi qu'une petite base positionnée au niveau du deuxième côté longitudinal 60.2. Cette face principale 76 présente des lignes de pliage obliques 94, 94' espacées de la ligne de pliage médiane 92 au niveau du deuxième côté longitudinal 60.2 et qui convergent au niveau du premier côté longitudinal 60.1. La découpe 96 a la forme d'un disque positionné sur la ligne de pliage médiane 92 et à proximité du premier côté longitudinal 60.1.

Selon ce premier mode de réalisation, les première et deuxième bandes de matière 60, 62 sont identiques.

Selon un deuxième mode de réalisation visible sur les figures 12 à 19 décrit au regard d'une première bande de matière 60, la face principale 76 de la première forme en creux 64 a une forme trapézoïdale et présente une grande base positionnée au niveau du deuxième côté longitudinal 60.2 ainsi qu'une petite base positionnée au niveau du premier côté longitudinal 60.1. Cette face principale 76 présente des lignes de pliage obliques 94, 94' espacées de la ligne de pliage médiane 92 au niveau du deuxième côté longitudinal 60.2 et qui convergent au niveau du premier côté longitudinal 60.1. La découpe 96 a une forme en V qui s'étend à partir du deuxième côté longitudinal 60.2 et dont les deux côtés sont sensiblement parallèles aux lignes de pliage obliques 94, 94'.

En complément, la face principale 76 de la deuxième forme en creux 66 a une forme trapézoïdale et présente une grande base positionnée au niveau du premier côté longitudinal 60.1 ainsi qu'une petite base positionnée au niveau du deuxième côté longitudinal 60.2. Cette face principale 76 présente des lignes de pliage obliques 94, 94' espacées de la ligne de pliage médiane 92 au niveau du premier côté longitudinal 60.1 et qui convergent au niveau du deuxième côté longitudinal 60.2. La découpe 96 a une forme en V qui s'étend à partir du premier côté longitudinal 60.1 et dont les deux côtés sont sensiblement parallèles aux lignes de pliage obliques 94, 94'.

Bien entendu, l'invention n'est pas limitée à ce mode de réalisation pour les premières et deuxièmes formes en creux 64, 66, 70, 72. Ainsi, chaque première ou deuxième bande de matière 60, 62 comprend des lignes de pliage agencées de manière à ce que chaque première ou deuxième forme en creux 64, 66, 70, 72 comprenne une face principale 76 inclinée par rapport aux zones de jonction 68, 74 et que les faces principales 76 de la première bande de matière 60 soient plaquées et reliées, par collage, soudage ou toute autre technique d'assemblage, aux faces principales 76 d'une deuxième bande de matière 62 lorsque les première et deuxième bandes de matière 60, 62 sont assemblées pour former la structure alvéolaire 50.

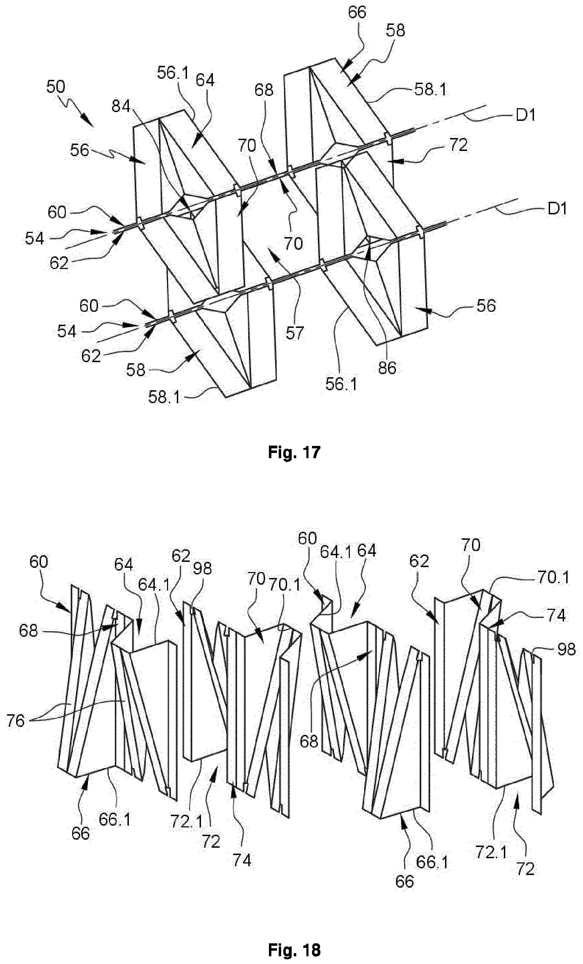

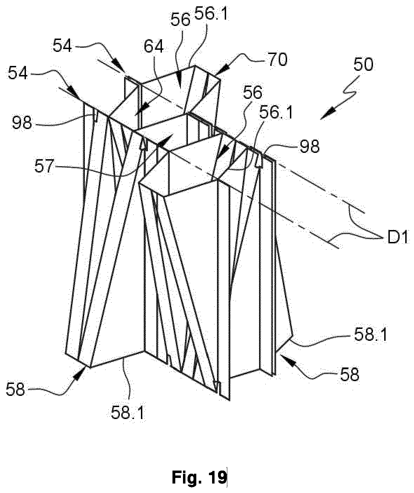

Selon une configuration, les premières et deuxièmes bandes de matière 60, 62 comprennent au niveau d'au moins un côté longitudinal parmi les premiers et deuxièmes côtés longitudinaux 60.1, 60.2 ; 62.1, 62.2 des entailles 98 (visibles sur les figures 18 et 19) qui coopèrent d'une bande de matière à l'autre de manière à former un réseau de drainage.

Selon un mode de réalisation, un procédé de fabrication d'une structure alvéolaire 50 comprend une première étape de mise en forme par pliage des premières et deuxièmes bandes de matière 60, 62 de manière à obtenir les premières et deuxièmes formes en creux 64, 66, 70, 72 ainsi que les premiers et deuxièmes sillons 88, 90 puis une étape d'assemblage des premières et deuxièmes bandes de matière 60, 62 en plaquant et reliant les zones de jonction 68 de la première bande de matière 60 contre les zones de jonction 74 de la deuxième bande de matière 62.

Lors de cette étape d'assemblage, les faces principales 76 des premières formes en creux 64 de la première bande de matière 60 d'une première rangée d'alvéoles sont plaquées contre les faces principales 76 des deuxièmes formes en creux 72 de la deuxième bande de matière 62 d'une deuxième rangée d'alvéoles. En parallèle, les faces principales 76 des deuxièmes formes en creux 66 de la première bande de matière 60 de la première rangée sont plaquées contre les faces principales 76 des premières formes en creux 70 de la deuxième bande de matière 62 de la deuxième rangée.

Lors de cet assemblage, les premiers et deuxièmes sillons 88, 90 sont conservés entrebâillés de manière à former les premiers et deuxièmes conduits 84, 86.

Selon un mode opératoire, l'étape d'assemblage peut comprendre une première sous-étape d'assemblage de chaque rangée d'alvéoles puis une deuxième sous-étape d'assemblage des rangées d'alvéoles entre elles. En variante, ces deux sous-étapes pourraient être réalisées simultanément, comme illustré sur les figures 18 et 19.

Préalablement à l'étape de mise en forme par pliage, le procédé de fabrication d'une structure alvéolaire comprend une étape de réalisation des découpes 96 dans les premières et deuxièmes bandes de matière à plat.

Quel que soit le mode de réalisation, les premières et deuxièmes formes en creux 64, 66, 70, 72 ainsi que les premiers et deuxièmes sillons 88, 90 des premières et deuxièmes bandes de matière 60, 62 sont obtenus par pliage, ce qui permet d'élargir le choix de matières et d'épaisseurs pour les premières et deuxièmes bandes de matière 60, 62.

Comme illustré sur les figures 11, 17 et 19, entre deux rangées d'alvéoles 54, des troisièmes alvéoles 57 débouchant à la fois sur la première face 50.1 et sur la deuxième face 50.2 de la structure alvéolaire 50 sont formées. Les troisièmes alvéoles 57 sont délimitées par les zones de jonction 68, 74 et les faces latérales 78, 78' des formes en creux 64, 66, 70, 72 des première et deuxième bandes de matière 60, 62. Ces troisièmes alvéoles 57 permettent d'atténuer des fréquences intermédiaires, entre des hautes fréquences et des basses fréquences. Ces troisièmes alvéoles 57 fonctionnent indépendamment des première et deuxième alvéoles 56, 58.

## Revendications

1. Procédé de fabrication d'une structure alvéolaire (50) présentant des première et deuxième faces (50.1, 50.2) ainsi que des rangées d'alvéoles (54) comprenant chacune de manière alternée des premières alvéoles (56) ouvertes en direction de la première face (50.1) et des deuxièmes alvéoles (58) ouvertes en direction de la deuxième face (50.2), la structure alvéolaire (50) comprenant également, entre chaque rangée d'alvéoles (54), des troisièmes alvéoles (57) ouvertes en direction des première et deuxième faces (50.1, 50.2) ; le procédé de fabrication d'une structure alvéolaire comprenant une étape de mise en forme par pliage de premières et deuxièmes bandes de matière (60, 62) afin d'obtenir, pour chaque première et deuxième bande de matière (60, 62), des premières et deuxièmes formes en creux (64, 66, 70, 72) ainsi que des zones de jonction (68, 74) séparant les premières et deuxièmes formes en creux (64, 66, 70, 72), les première et deuxième bandes de matière (60, 62) étant identiques, ainsi qu'une étape d'assemblage des premières et deuxièmes bandes de matière (60, 62) pour former la structure alvéolaire (50) en plaquant et reliant les zones de jonction (68) des premières bandes de matière (60) contre les zones de jonction (74) des deuxièmes bandes de matière (62), les premières et deuxièmes formes en creux (64, 66, 70, 72) étant alternées et agencées de manière à former les premières et deuxièmes alvéoles (56, 58) ainsi que les troisièmes alvéoles (57), **caractérisé en ce que** lors de l'étape de mise en forme par pliage des premières et deuxièmes bandes de matière (60, 62), chaque première bande de matière (60) est mise en forme par pliage pour obtenir en outre un premier sillon (88) et chaque deuxième bande de matière (62) est mise en forme par pliage pour obtenir en outre un deuxième sillon (90), les premier et deuxième sillons (88, 90) formant des conduits (84, 86) reliant chacun un couple de première et deuxième alvéoles (56, 58).

2. Procédé de fabrication d'une structure alvéolaire (50) selon la revendication 1, **caractérisé en ce que** chaque première et deuxième bande de matière (60, 62) comprend des lignes de pliage principales (80, 80') agencées de manière à ce que chaque première et deuxième forme en creux (64, 66, 70, 72) comprenne une face principale (76) séparée de première et deuxième faces latérales (78, 78') triangulaires, lesdites première et deuxième faces latérales (78, 78') étant disposées de part et d'autre de la face principale (76), ainsi que des lignes de pliage secondaire (82, 82') agencées de manière à ce que chaque première et deuxième face latérale (78, 78') soit séparée d'une zone de jonction (68, 74), la face principale (76) étant inclinée par rapport aux zones de jonction (68, 74) et **en ce que**, lors de l'étape d'assemblage, les faces principales (76) de chaque première bande de matière (60) sont plaquées contre et reliées aux faces principales (76) d'une deuxième bande de matière (62).

3. Procédé de fabrication d'une structure alvéolaire (50) selon la revendication 2, **caractérisé en ce que** pour chaque première et deuxième formes en creux (64, 66, 70, 72), les lignes de pliage principales (80, 80') et secondaires (82, 82') sont symétriques par rapport à un axe médian longitudinal (AML) équidistant des zones de jonction (68, 74) disposées de part et d'autre de la première et deuxième formes en creux (64, 66, 70, 72).

4. Procédé de fabrication d'une structure alvéolaire (50) selon l'une des revendications 2 ou 3, **caractérisé en ce que** les premiers et deuxièmes sillons (88, 90) sont positionnés au niveau des faces principales (76) des premières et deuxièmes formes en creux (64, 66, 70, 72) et comprennent chacun des lignes de pliage (92, 94, 94') agencées de manière à ce que chaque couple de premier et deuxième sillons (88, 90) forme un conduit (84, 86) positionné entre deux faces principales (76) plaquées l'une contre l'autre.

5. Procédé de fabrication d'une structure alvéolaire (50) selon la revendication 4, **caractérisé en ce que** chaque premier et deuxième sillon (88, 90) comprend une ligne de pliage médiane (92) ainsi que deux lignes de pliage obliques (94, 94') symétriques par rapport à la ligne de pliage médiane (92) et sécantes au niveau de la ligne de pliage médiane (92).

6. Procédé de fabrication d'une structure alvéolaire (50) selon l'une des revendications 2 à 5, **caractérisé en ce que** le procédé de fabrication comprend une étape de réalisation d'une découpe (96) sur la face principale (76) de chaque première et deuxième forme en creux de chaque première et deuxième bandes de matière (60, 62) à plat préalablement à l'étape de mise en forme par pliage, chaque découpe (96) étant configurée pour faire communiquer une première ou deuxième alvéole (56, 58) et un conduit (84, 86).

7. Procédé de fabrication d'une structure alvéolaire (50) selon la revendication 6, **caractérisé en ce que** chaque première et deuxième bande de matière (60, 62) comprend des premier et deuxième côtés longitudinaux (60.1, 60.2, 62.1, 62.2), la découpe (96) étant décalée par rapport aux premier et deuxième côtés longitudinaux (60.1, 60.2, 62.1, 62.2) des première et deuxième bandes de matière (60, 62).

8. Procédé de fabrication d'une structure alvéolaire (50) selon la revendication 6, **caractérisé en ce que** chaque première et deuxième bande de matière (60, 62) comprend des premier et deuxième côtés longitudinaux (60.1, 60.2, 62.1, 62.2), la découpe (96) étant sécante avec un côté longitudinal parmi les premier et deuxième côtés longitudinaux (60.1, 60.2, 62.1, 62.2) des première et deuxième bandes de matière (60, 62).

9. Structure alvéolaire (50) présentant des première et deuxième faces (50.1, 50.2) ainsi que des rangées d'alvéoles (54) comprenant chacune, de manière alternée, des premières alvéoles (56) ouvertes en direction de la première face (50.1) et des deuxièmes alvéoles (58) ouvertes en direction de la deuxième face (50.2), la structure alvéolaire (50) comprenant également, entre chaque rangée d'alvéoles (54), des troisièmes alvéoles (57) ouvertes en direction des première et deuxième faces (50.1, 50.2), chaque rangée d'alvéoles (54) comprenant des premières et deuxièmes bandes de matière (60, 62) identiques et accolées l'une contre l'autre, chaque première et deuxième bandes de matière (60, 62) étant mise en forme par pliage et comprenant des premières formes en creux (64, 70), des deuxièmes formes en creux (66, 72) ainsi que des zones de jonction (68, 74) séparant les premières et deuxièmes formes en creux (64, 66, 70, 72), les premières et deuxièmes formes en creux (64, 66, 70, 72) étant alternées et agencées de manière à former les premières et deuxièmes alvéoles (56, 58) ainsi que les troisièmes alvéoles (57) ; **caractérisée en ce que** la structure alvéolaire (50) comprend des conduits (84, 86) reliant chacun un couple de première et deuxième alvéoles (56, 58), chaque conduit (84, 86) comprenant un premier sillon (88) au niveau de chaque première bande de matière (60) ainsi qu'un deuxième sillon (90) au niveau de chaque deuxième bande de matière (62).

10. Structure alvéolaire (50) selon la revendication 9, **caractérisée en ce que** chaque première ou deuxième forme en creux (64, 66, 70, 72) comprend une face principale (76) inclinée par rapport aux zones de jonction (68, 74) ainsi que des première et deuxième faces latérales (78, 78') triangulaires, disposées de part et d'autre de la face principale (76), et **en ce que** les faces principales (76) de chaque première bande de matière (60) sont plaquées contre et reliées aux faces principales (76) de chaque deuxième bande de matière (62).

11. Structure alvéolaire (50) selon la revendication 10, **caractérisée en ce que** chaque face principale (76) de chaque première et deuxième forme en creux (64, 66, 70, 72) comprend une découpe (96) configurée pour faire communiquer une première ou deuxième alvéole (56, 58) et un conduit (84, 86).

12. Revêtement d'absorption acoustique comprenant une couche poreuse, une couche réflectrice et une structure alvéolaire selon l'une des revendications 9 à 11, ladite structure alvéolaire étant intercalée entre la couche poreuse et la couche réflectrice.

## Patentansprüche

1. Verfahren zur Herstellung einer Wabenstruktur (50), welche eine erste und eine zweite Seite (50.1, 50.2) sowie Wabenreihen (54), die jeweils abwechselnd in Richtung der ersten Seite (50.1) offene erste Waben (56) und in Richtung der zweiten Seite (50.2) offene zweite Waben (58) umfassen, aufweist, wobei die Wabenstruktur (50) außerdem zwischen jeder Wabenreihe (54) in Richtung der ersten und der zweiten Seite (50.1, 50.2) offene dritte Waben (57) umfasst; wobei das Verfahren zur Herstellung einer Wabenstruktur einen Schritt der Formgebung durch Falten von ersten und zweiten Materialstreifen (60, 62) umfasst, um für jeden ersten und zweiten Materialstreifen (60, 62) erste und zweite Hohlformen (64, 66, 70, 72) sowie Anschlussbereiche (68, 74), welche die ersten und zweiten Hohlformen (64, 66, 70, 72) trennen, zu erhalten, wobei der erste und der zweite Materialstreifen (60, 62) identisch sind, sowie einen Schritt des Zusammenfügens der ersten und zweiten Materialstreifen (60, 62), um die Wabenstruktur (50) zu bilden, indem die Anschlussbereiche (68) der ersten Materialstreifen (60) gegen die Anschlussbereiche (74) der zweiten Materialstreifen (62) gepresst und mit ihnen verbunden werden, wobei die ersten und zweiten Hohlformen (64, 66, 70, 72) abwechselnd angeordnet und so ausgebildet werden, dass sie die ersten und zweiten Waben (56, 58) sowie die dritten Waben (57) bilden, **dadurch gekennzeichnet, dass** im Schritt der Formgebung durch Falten der ersten und zweiten Materialstreifen (60, 62) jeder erste Materialstreifen (60) durch Falten geformt wird, um außerdem eine erste Furche (88) zu erhalten, und jeder zweite Materialstreifen (62) durch Falten geformt wird, um außerdem eine zweite Furche (90) zu erhalten, wobei die erste und die zweite Furche (88, 90) Kanäle (84, 86) bilden, die jeweils ein Paar aus einer ersten und einer zweiten Wabe (56, 58) verbinden.

2. Verfahren zur Herstellung einer Wabenstruktur (50) nach Anspruch 1, **dadurch gekennzeichnet, dass** jeder erste und zweite Materialstreifen (60, 62) Hauptfaltlinien (80, 80') umfasst, die so ausgebildet sind, dass jede erste und zweite Hohlform (64, 66, 70, 72) eine Hauptseite (76), die von einer ersten und einer zweiten dreieckigen lateralen Seite (78, 78') getrennt ist, umfasst, wobei die erste und die zweite laterale Seite (78, 78') beiderseits der Hauptseite (76) angeordnet sind, sowie sekundäre Faltlinien (82, 82'), die so ausgebildet sind, dass jede erste und zweite laterale Seite (78, 78') von einem Anschlussbereich (68, 74) getrennt ist, wobei die Hauptseite (76) bezüglich der Anschlussbereiche (68, 74) geneigt ist, und dadurch, dass im Schritt des Zusammenfügens die Hauptseiten (76) jedes ersten Materialstreifens (60) gegen die Hauptseiten (76) eines zweiten Materialstreifens (62) gepresst und mit ihnen verbunden werden.

3. Verfahren zur Herstellung einer Wabenstruktur (50) nach Anspruch 2, **dadurch gekennzeichnet, dass** für jede erste und zweite Hohlform (64, 66, 70, 72) die Hauptfaltlinien (80, 80') und sekundären Faltlinien (82, 82') symmetrisch bezüglich einer Längsmittelachse (AML) sind, die von den beiderseits der ersten und zweiten Hohlform (64, 66, 70, 72) angeordneten Anschlussbereichen (68, 74) äquidistant ist.

4. Verfahren zur Herstellung einer Wabenstruktur (50) nach einem der Ansprüche 2 oder 3, **dadurch gekennzeichnet, dass** die ersten und zweiten Furchen (88, 90) an den Hauptseiten (76) der ersten und zweiten Hohlformen (64, 66, 70, 72) positioniert sind und jeweils Faltlinien (92, 94, 94') umfassen, die so ausgebildet sind, dass jedes Paar aus einer ersten und einer zweiten Furche (88, 90) einen Kanal (84, 86) bildet, der zwischen zwei gegeneinander gepressten Hauptseiten (76) positioniert ist.

5. Verfahren zur Herstellung einer Wabenstruktur (50) nach Anspruch 4, **dadurch gekennzeichnet, dass** jede erste und zweite Furche (88, 90) eine Mittelfaltlinie (92) sowie zwei schräge Faltlinien (94, 94'), die bezüglich der Mittelfaltlinie (92) symmetrisch sind und sich an der Mittelfaltlinie (92) schneiden, umfasst.

6. Verfahren zur Herstellung einer Wabenstruktur (50) nach einem der Ansprüche 2 bis 5, **dadurch gekennzeichnet, dass** das Herstellungsverfahren einen Schritt der Herstellung eines Ausschnitts (96) auf der Hauptseite (76) jeder ersten und zweiten Hohlform jedes ersten und zweiten flach liegenden Materialstreifens (60, 62) vor dem Schritt der Formgebung durch Falten umfasst, wobei jeder Ausschnitt (96) dazu ausgebildet ist zu bewirken, dass eine erste oder zweite Wabe (56, 58) und ein Kanal (84, 86) in Verbindung stehen.

7. Verfahren zur Herstellung einer Wabenstruktur (50) nach Anspruch 6, **dadurch gekennzeichnet, dass** jeder erste und zweite Materialstreifen (60, 62) eine erste und eine zweite Längsseite (60.1, 60.2, 62.1, 62.2) umfasst, wobei der Ausschnitt (96) bezüglich der ersten und zweiten Längsseite (60.1, 60.2, 62.1, 62.2) des ersten und zweiten Materialstreifens (60, 62) versetzt ist.

8. Verfahren zur Herstellung einer Wabenstruktur (50) nach Anspruch 6, **dadurch gekennzeichnet, dass** jeder erste und zweite Materialstreifen (60, 62) eine erste und eine zweite Längsseite (60.1, 60.2, 62.1, 62.2) umfasst, wobei der Ausschnitt (96) eine Längsseite von der ersten und zweiten Längsseite (60.1, 60.2, 62.1, 62.2) des ersten und zweiten Materialstreifens (60, 62) schneidet.

9. Wabenstruktur (50), welche eine erste und eine zweite Seite (50.1, 50.2) sowie Wabenreihen (54), die jeweils abwechselnd in Richtung der ersten Seite (50.1) offene erste Waben (56) und in Richtung der zweiten Seite (50.2) offene zweite Waben (58) umfassen, aufweist, wobei die Wabenstruktur (50) außerdem zwischen jeder Wabenreihe (54) in Richtung der ersten und der zweiten Seite (50.1, 50.2) offene dritte Waben (57) umfasst, wobei jede Wabenreihe (54) erste und zweite Materialstreifen (60, 62) umfasst, die identisch und aneinandergefügt sind, wobei jeder erste und zweite Materialstreifen (60, 62) durch Falten geformt wird und erste Hohlformen (64, 70), zweite Hohlformen (66, 72) sowie Anschlussbereiche (68, 74), welche die ersten und zweiten Hohlformen (64, 66, 70, 72) trennen, umfasst, wobei die ersten und zweiten Hohlformen (64, 66, 70, 72) abwechselnd angeordnet und so ausgebildet sind, dass sie die ersten und zweiten Waben (56, 58) sowie die dritten Waben (57) bilden, **dadurch gekennzeichnet, dass** die Wabenstruktur (50) Kanäle (84, 86) umfasst, die jeweils ein Paar aus einer ersten und einer zweiten Wabe (56, 58) verbinden, wobei jeder Kanal (84, 86) eine erste Furche (88) an jedem ersten Materialstreifen (60) sowie eine zweite Furche (90) an jedem zweiten Materialstreifen (62) umfasst.

10. Wabenstruktur (50) nach Anspruch 9, **dadurch gekennzeichnet, dass** jede erste oder zweite Hohlform (64, 66, 70, 72) eine Hauptseite (76), die bezüglich der Anschlussbereiche (68, 74) geneigt ist, sowie eine erste und eine zweite dreieckige laterale Seite (78, 78'), die beiderseits der Hauptseite (76) angeordnet sind, umfasst, und dadurch, dass die Hauptseiten (76) jedes ersten Materialstreifens (60) gegen die Hauptseiten (76) jedes zweiten Materialstreifens (62) gepresst und mit ihnen verbunden sind.

11. Wabenstruktur (50) nach Anspruch 10, **dadurch gekennzeichnet, dass** jede Hauptseite (76) jeder ersten und zweiten Hohlform (64, 66, 70, 72) einen Ausschnitt (96) umfasst, der dazu ausgebildet ist zu bewirken, dass eine erste oder zweite Wabe (56, 58) und ein Kanal (84, 86) in Verbindung stehen.

12. Schallabsorptionsbeschichtung, welche eine poröse Schicht, eine reflektierende Schicht und eine Wabenstruktur nach einem der Ansprüche 9 bis 11 umfasst, wobei die Wabenstruktur zwischen der porösen Schicht und der reflektierenden Schicht angeordnet ist.

## Claims

1. Method for manufacturing a cellular structure (50) having first and second faces (50.1, 50.2) and also rows of cells (54) each alternatingly comprising first cells (56), which are open towards the first face (50.1), and second cells (58), which are open towards the second face (50.2), the cellular structure (50) likewise comprising, between each row of cells (54), third cells (57), which are open towards the first and second faces (50.1, 50.2); the method for manufacturing a cellular structure comprising a step of shaping first and second strips of material (60, 62) by bending in order to obtain, for each first and second strip of material (60, 62), first and second recessed shapes (64, 66, 70, 72) and also joining zones (68, 74) separating the first and second recessed shapes (64, 66, 70, 72), the first and second strips of material (60, 62) being identical, and also a step of assembling the first and second strips of material (60, 62) so as to form the cellular structure (50) by holding and connecting the joining zones (68) of the first strips of material (60) against the joining zones (74) of the second strips of material (62), the first and second recessed shapes (64, 66, 70, 72) alternating and being arranged so as to form the first and second cells (56, 58) and also the third cells (57), **characterized in that**, during the step of shaping by bending the first and second strips of material (60, 62), each first strip of material (60) is shaped by bending so as to also obtain a first channel (88) and each second strip of material (62) is shaped by bending so as to also obtain a second channel (90), the first and second channels (88, 90) forming the ducts (84, 86), each of which connects a pair of first and second cells (56, 58).

2. Method for manufacturing a cellular structure (50) according to Claim 1, **characterized in that** each first and second strip of material (60, 62) comprises main bending lines (80, 80') arranged such that each first and second recessed shape (64, 66, 70, 72) comprises a main face (76) separated from first and second triangular lateral faces (78, 78'), said first and second lateral faces (78, 78') being arranged on either side of the main face (76), and also secondary bending lines (82, 82') arranged such that each first and second lateral face (78, 78') is separated from a joining zone (68, 74), the main face (76) being inclined with respect to the joining zones (68, 74) and **in that**, during the assembly step, the main faces (76) of each first strip of material (60) are held against and connected to the main faces (76) of a second strip of material (62).

3. Method for manufacturing a cellular structure (50) according to Claim 2, **characterized in that**, for each first and second recessed shape (64, 66, 70, 72), the main bending lines (80, 80') and secondary bending lines (82, 82') are symmetrical with respect to a longitudinal median axis (AML) equidistant from the joining zones (68, 74) arranged on either side of the first and second recessed shapes (64, 66, 70, 72).

4. Method for manufacturing a cellular structure (50) according to either of Claims 2 and 3, **characterized in that** the first and second channels (88, 90) are positioned in the main faces (76) of the first and second recessed shapes (64, 66, 70, 72) and each comprise bending lines (92, 94, 94') arranged such that each pair of first and second channels (88, 90) forms a duct (84, 86) positioned between two main faces (76) held against one another.

5. Method for manufacturing a cellular structure (50) according to Claim 4, **characterized in that** each first and second channel (88, 90) comprises a median bending line (92) and also two oblique bending lines (94, 94') symmetrical with respect to the median bending line (92) and intersecting at the median bending line (92).

6. Method for manufacturing a cellular structure (50) according to one of Claims 2 to 5, **characterized in that** the manufacturing method comprises a step of making a cutout (96) in the main face (76) of each first and second recessed shape of each first and second strip of material (60, 62) in the flat state prior to the step of shaping by bending, each cutout (96) being configured to place a first or second cell (56, 58) and a duct (84, 86) in communication.

7. Method for manufacturing a cellular structure (50) according to Claim 6, **characterized in that** each first and second strip of material (60, 62) comprises first and second longitudinal sides (60.1, 60.2, 62.1, 62.2), the cutout (96) being offset with respect to the first and second longitudinal sides (60.1, 60.2, 62.1, 62.2) of the first and second strips of material (60, 62).

8. Method for manufacturing a cellular structure (50) according to Claim 6, **characterized in that** each first and second strip of material (60, 62) comprises first and second longitudinal sides (60.1, 60.2, 62.1, 62.2), the cutout (96) intersecting one longitudinal side from among the first and second longitudinal sides (60.1, 60.2, 62.1, 62.2) of the first and second strips of material (60, 62) .

9. Cellular structure (50) having first and second faces (50.1, 50.2) and also rows of cells (54) each alternatingly comprising first cells (56), which are open towards the first face (50.1), and second cells (58), which are open towards the second face (50.2), the cellular structure (50) likewise comprising, between each row of cells (54), third cells (57), which are open towards the first and second faces (50.1, 50.2), each row of cells (54) comprising first and second strips of material (60, 62) that are identical and held against one another, each first and second strip of material (60, 62) being shaped by bending and comprising first recessed shapes (64, 70), second recessed shapes (66, 72) and joining zones (68, 74) separating the first and second recessed shapes (64, 66, 70, 72), the first and second recessed shapes (64, 66, 70, 72) alternating and being arranged so as to form the first and second cells (56, 58) and also the third cells (57); **characterized in that** the cellular structure (50) comprises ducts (84, 86), each of which connects a pair of first and second cells (56, 58), each duct (84, 86) comprising a first channel (88) in each first strip of material (60) and also a second channel (90) in each second strip of material (62).

10. Cellular structure (50) according to Claim 9, **characterized in that** each first or second recessed shape (64, 66, 70, 72) comprises a main face (76) inclined with respect to the joining zones (68, 74) and also first and second triangular lateral faces (78, 78') arranged on either side of the main face (76), and **in that** the main faces (76) of each first strip of material (60) are held against and connected to the main faces (76) of each second strip of material (62).

11. Cellular structure (50) according to Claim 10, **characterized in that** each main face (76) of each first and second recessed shape (64, 66, 70, 72) comprises a cutout (96) configured to place a first or second cell (56, 58) and a duct (84, 86) in communication.

12. Acoustic absorption coating comprising a porous layer, a reflective layer and a cellular structure according to one of Claims 9 to 11, said cellular structure being interposed between the porous layer and the reflective layer.
